# EUROPEAN PATENT SPECIFICATION

(11) **EP 4 570 854 B1**
(45) Date of publication and mention of the grant of the patent: **16.09.2026**
(21) Application number: 23217077.9
(22) Date of filing: 15.12.2023
(51) Int. Cl.: C08L 23/06, C08K 3/014, C08K 3/22

(54) **A FLAME RETARDANT POLYMER COMPOSITION**
FLAMMWIDRIGE POLYMERZUSAMMENSETZUNG
COMPOSITION POLYMÈRE IGNIFUGE

(43) Date of publication of application: 18.06.2025
(73) Proprietor: Borealis GmbH, 1020 Vienna (AT)
(72) Inventor: HJÄRTFORS, Emil, 44486 Stenungsund (SE); GSCHNEIDTNER, Tina, 44486 Stenungsund (SE); KARLSSON, Linus, 44486 Stenungsund (SE); THUNBERG, Johannes, 44486 Stenungsund (SE)
(74) Representative: Maikowski & Ninnemann Patentanwälte Partnerschaft mbB

(56) References cited:
- CN-A- 102 140 192
- US-A1- 2015 376 368
- US-A1- 2020 190 322

## Description

The present invention relates to a flame retardant polymer composition and an article, in particular a wire or cable, comprising the same.

### Description

Cables typically comprise a jacketing layer of a flame retardant polymer composition. The material used as jacketing layer should provide a high quality surface with good flame retardation and mechanical properties.

Different classes of cables (classes E, D, C and 82) used in buildings are defined in EN50575. Class E requires a cable to withstand a 1 kW burner for 1 minute in a vertical position (EN60332-1). Such cables are commonly used in buildings for private homes (domestic buildings). For class D, C and 82 a complete cable ladder is tested in the so-called bunch cable test (EN50399). For cables used in public buildings commonly, the cables have to pass class D or C. The most demanding class 82 is used for the most demanding installations with respect to fire safety e.g. tunnels, airport, subways etc.

In addition to flame retardant requirements, the polymer compositions used as cable coatings have to fulfill certain mechanical requirements, as for example defined in in IEC 60840:2020 "Power cables with extruded insulation and their accessories for rated voltages above 30 kV (Um= 36 kV) up to 150 kV (Um= 170 kV)- Test methods and requirements".

Polymer compositions with both flame retardant properties and decent mechanical properties and their use as surface layer on wires and cables are known from the prior art.

EP 3 499 515 B1 refers to a flame retardant and fire resistant polyolefin composition comprising a polyolefin homo- or copolymer, a metal hydroxide (such as aluminum hydroxide), calcium borate and a polysiloxane. Said composition has very good limiting oxygen index (LOI) with values above 38 %. However, mechanical properties such as elongation at break or tensile strength are relatively low and not sufficient. Besides, borates are reported to be toxic and their use should therefore be avoided.

WO 2021/111006 A1 discloses a flame retardant polymer composition with good flame retardant properties and acceptable mechanical properties for low voltage cable applications but not sufficient for higher mechanical demands as described in IEC 60840:2020.

WO 2023/061908 A1 refers to a flame retardant polymer composition comprising an ethylene-acrylat-copolymer, polyethylene and/or polypropylene containing maleic acid anhydride, ethylene-alpha olefin copolymers, polysiloxane and grounded magnesium hydroxide. However, with aging the mechanical properties of the polymer composition deteriorated fast.

The polymer compositions for wire and cable applications known from the prior art still not combine excellent flame retardant properties, smooth shiny surface properties and good mechanical properties. In addition, many known flame retardant polymer compositions are based on halogen or borate compounds as flame retardant or synergists, being critical from an environmental point of view. Furthermore, the flame retardant polymer compositions known from the prior art are not easy to process and for the compositions containing aluminum trihydroxide as flame retardant the extruder output is limited.

Thus, it was the objective of the present invention to overcome these deficiencies and to provide flame retardant polymer compositions having not only excellent flame retardant properties, but showing in addition good mechanical properties also after aging. In addition, it was a further object of the present invention to provide flame retardant compositions based on borate-free compounds. Another object of the present invention was to provide flame retardant polymer compositions being easy to process and allowing a high extruder output.

These objects have been solved by the flame retardant polymer composition according to claim 1 comprising at least the following components:
A) 15.0 to 25.0 wt% (based on the overall weight of the polymer composition) of a copolymer of ethylene and alpha olefin comonomer units having from 4 to 10 carbon atoms, which has a density of from 800 to 920 kg/m³ (ISO 1183);
B) 20.0 to 35.0 wt% (based on the overall weight of the polymer composition) of a copolymer of ethylene and alpha olefin comonomer units having from 4 to 10 carbon atoms, which has a density of from 930 to 980 kg/m³ (ISO 1183) and a melt flow rate MFR₅ of from 0.05 to 2.50 g/10 min (ISO 1133 at 190°C and a load of 5.0 kg);
C) 0.5 to 4.0 wt% (based on the overall weight of the polymer composition) of a polyethylene and/or polypropylene containing units originating from maleic acid anhydride;
D) 40.0 to 60.0 wt% (based on the overall weight of the polymer composition) of a magnesium hydroxide having a purity of ≥ 95 wt%, and
E) 0.1 to 3.0 wt% (based on the overall weight of the polymer composition) of a silicon fluid and/or silicone gum; and
optionally further additives, wherein the sum of all ingredients adds always up to 100 wt%.

Advantageous embodiments of the polymer composition in accordance with the present invention are specified in the dependent claims 2 to 13.

Claim 14 refers to an article, such as a wire or cable, comprising the polymer composition according to the invention.

It is to be understood that the present polymer composition is free of any borate, in particular free of any calcium borate, and free of any further metal hydroxide, in particular free of any Al(OH)₃. In particular by omitting borate as flame retardant, any health and environmental related issues due to the use of borate are reduced and avoided.

It is further to be understood that the present polymer composition is preferably free of any ethylene-acrylate-copolymer, such as a copolymer of ethylene comprising units selected from the group consisting of methyl acrylate, methyl methacrylate or mixtures thereof. Preferably a copolymer comprising and preferably consisting of ethylene units and methyl acrylate units is omitted, wherein the content of methyl acrylate units is in the range of 10 to 35 wt% and preferably in the range of 20 to 30 wt% based on the overall weight of the copolymer. Said omitted copolymer may also comprise units with hydrolysable silane-groups. By omitting said ethylene-acrylate-copolymer the mechanical properties of the polymer composition were surprisingly increased.

The present polymer composition comprises , good flame retardant properties, good surface properties, good mechanical properties andt is environmental friendly.

For example, the limiting oxygen index (LOI) (ASTM D 2863-87; ISO 4589) of the flame retardant polymer composition according to the invention may be ≥ 30, preferably ≥ 31, more preferably ≥ 32, in particular in a range between 30 and 40, more in particular in a range between 31 and 38, even more in particular in a range between 31 and 34.

In an embodiment, the flame retardant polymer composition has an elongation at break (ISO 527-1, ISO 527-2) of ≥ 480 %, preferably ≥ 500 %, more preferably ≥ 510 %, even more preferably ≥ 520 %, still more preferably ≥ 530 % or ≥ 540 %, in particular in a range between 480 and 650 %, more in particular in a range between 500 and 600 %, even more in particular in a range between 510 and 580 %.

In another embodiment, the flame retardant polymer composition has a tensile strength at 23°C (50 mm/min, ISO 527-2) of at least 10.0 MPa, preferably of at least 12.0 MPa, more preferably of at least 14.0 MPa, in particular in a range between 10.0 and 25.0 MPa, more in particular in a range between 12.0 and 18.0 MPa.

In a further embodiment of the flame retardant polymer composition has a melt flow rate MFR₂₁ (ISO 1133, 21.6 kg, 150°C) of at least 2.0 g/10 min, preferably at least 2.5 g/10 min, more preferably at least 2.8 g/ 10 min, in particular in the range between 2.0 and 5.0 g/10 min, preferably between 2.5 and 4.5 g/10min, more preferably between 2.8 and 4.5.0 g/10min;

In still a further embodiment of the flame retardant polymer composition has a melt flow rate MFR₂₁ (ISO 1133, 21.6 kg, 190°C) of at least 4.0 g/10 min, preferably at least 4.5 g/10 min, more preferably at least 5.0 g/ 10 min, in particular in the range between 4.0 and 7.0 g/10 min, preferably between 4.5 and 6.5 g/10min, more preferably between 5.0 and 6.0 g/10min; i.e. the flame retardant polymer composition can be used in extruding processes.

Thus, a polymer composition is provided that not only fulfills the required standards for flame retardation, but also excellent mechanical properties, in particular excellent elongation at break and tensile strength without signs of fatigue. This allows for a long term use of the polymer composition as jacketing layer for wires and cables.

### Definitions

### Indications of Quantity

The polymer compositions in accordance with the present invention comprise the components A) to component E) and optional additives. The requirement applies here that the components A) to component E) and optional additives add up to 100 wt% in sum. The fixed ranges of the indications of quantity for the individual components A) to component E) and optional additives are to be understood such that an arbitrary quantity for each of the individual components can be selected within the specified ranges provided that the strict provision is satisfied that the sum of all the components A) to component E) and optional additives add up to 100 wt%.

Throughout the present application, the particle size of a fraction of a particulate material is described by its particle size distribution. The value d, represents the diameter relative to which x % by weight of the particles have diameters less than dx. The d₅₀ value is thus the "median particle size" at which 50 wt% of all particles are smaller than the indicated particle size.

Where the term "comprising" is used in the present description and claims, it does not exclude other non-specified elements of major or minor functional importance. For the purposes of the present invention, the term "consisting of is considered to be a preferred embodiment of the term "comprising of". If hereinafter a group is defined to comprise at least a certain number of embodiments, this is also to be understood to disclose a group, which preferably consists only of these embodiment.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

A polyethylene in the sense of the present invention is a polymer with a molar majority (i.e. at least more than 50 mol%) of ethylene monomer units. A copolymer of ethylene is a polymer with a molar majority of ethylene monomer units and at least one unit of a different chemical moiety (e.g. selected from alpha-olefins, maleic acid anhydride). The units of a different chemical moiety can be introduced into the polymer by copolymerization (i.e. comonomer units) or by grafting onto the polymeric backbone as known in the art.

A polypropylene in the sense of the present invention is a polymer with a molar majority (i.e. at least more than 50 mol%) of propylene monomer units. A copolymer of propylene is a polymer with a molar majority of propylene monomer units and at least one unit of a different chemical moiety (e.g. selected from maleic acid anhydride). The units of a different chemical moiety can be introduced into the polymer by copolymerization (i.e. comonomer units) or by grafting onto the polymeric backbone as known in the art.

### Component A)

As mentioned above, the polyolefin composition according to the invention may comprise 15.0 to 25.0 wt% (based on the overall weight of the polymer composition) of a copolymer of ethylene and alpha olefin comonomer units having from 4 to 10 carbon atoms, which has a density of from 800 to 920 kg/m³ (ISO 1183).

According to a preferred embodiment of the present invention the content of component A) in the polymer composition is in the range of 17.0 to 23.0 wt%, preferably 18.0 to 21.0 wt%, more preferably 19.0 to 20.0 wt% (based on the overall weight of the polymer composition).

A preferred embodiment in accordance with the present invention stipulates that component A) is a copolymer of ethylene and 1-octene; whereby said copolymer preferably has a density in the range of 860 kg/m³ to 910 kg/m³, preferably in the range of 870 to 900 kg/m³ and more preferably in the range of 880 to 890 kg/m³, measured according to ISO 1183.

The copolymer preferably used as component A) is an ethylene-octene copolymer with good flow characteristics and impact properties in blends with polypropylene and polyethylene. The ethylene based 1-octene elastomer has an MFR₂ in the range of 0.1 to 10.0 g/10 min, preferably in the range of 0.5 to 5.0 g/10 min, more preferably in the range of 0.5 to 3.0 g/10 min and still more preferably in the range of 1.0 to 3.0 g/10 min measured according to ISO 1133 at 190°C and a load of 2.16 kg.

Copolymers of ethylene and 1-octene which may be used as component A) can also be described as elastomers and are commercially available, for example from Borealis AG (Austria) under the tradenames Queo 8201 or Queo 8203.

### Component B)

The polymer composition according to the invention comprises 20.0 to 35.0 wt% (based on the overall weight of the polymer composition) of a copolymer of ethylene and alpha olefin comonomer units having from 4 to 10 carbon atoms, which has a density of from 930 to 980 kg/m³ (ISO 1183) and a melt flow rate MFR₅ of from 0.05 to 2.50 g/10 min (ISO 1133 at 190°C and a load of 5.0 kg).

According to a preferred embodiment of the present invention the content of component B) in the polymer composition is 22.0 to 32.0 wt%; preferably 25.0 to 30.0 wt%, more preferably 27.0 to 29.0 wt%, (based on the overall weight of the polymer composition) of a copolymer of ethylene and alpha olefin comonomer units having from 4 to 10 carbon atoms.

Component B) is preferably a copolymer of ethylene and one or more alpha olefin comonomer units selected from 1-butene, 1-hexene and/or 1-octene. Preferably component B) is selected from a copolymer of ethylene and 1-butene, a copolymer of ethylene and 1-hexene and a copolymer of ethylene and 1-octene, more preferably from a copolymer of ethylene and 1-butene and a copolymer of ethylene and 1-hexene. It is especially preferred that component B) is a copolymer of ethylene and 1-hexene.

A preferred embodiment in accordance with the present invention stipulates that component B) is a copolymer of ethylene and 1-hexene, which has a density of from 930 to 980 kg/m³, preferably from 940 to 970 kg/m³, more preferably from 945 to 960 kg/m³ (ISO 1183), and a melt flow rate MFR₅ of from 0.05 to 2.50 g/10 min, preferably from 0.1 to 1.0 g/10 min, more preferably from 0.2 to 0.5 g/10 min (ISO 1133 at 190°C and a load of 5.0 kg).

The copolymer used as component B) can also be described as a bimodal polyethylene polymer. The term "bimodal" means herein that the polymer consists of two polyethylene fractions, which have been produced under different polymerization conditions resulting in different (weight average) molecular weights and molecular weight distributions for the fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. The bimodal polyethylene may comprise a polyethylene homopolymer and a polyethylene copolymer. By ethylene homopolymer is meant a polymer which is formed essentially of only ethylene monomer units, i.e. is 99.9 wt% ethylene or more. It will be appreciated that minor traces of other monomers may be present due to industrial ethylene containing trace amounts of other monomers. Processes for obtaining such polymers are well known to a person skilled in the art and described for example in WO 2015/121161 A1.

### Component C)

The polymer composition according to the invention comprises as component C) 0.5 to 4.0 wt% (based on the overall weight of the polymer composition) of a polyethylene and/or polypropylene containing units originating from maleic acid anhydride.

In an embodiment of the present polymer composition, comprises as component C) 0.7 to 3.0 wt%, preferably 0.8 to to 2.0 wt%, more preferably 0.9 to 1.5 wt% (based on the overall weight of the polymer composition) of a polyethylene and/or polypropylene containing units originating from maleic acid anhydride

According to another preferred embodiment in accordance with the present invention component C) is a obtained by co-polymerizing and/or grafting polyethylene with maleic acid anhydride, whereby a grafted polyethylene is preferred, more preferably the content of maleic acid anhydride is in the range of 0.3 to 2.0 wt%.

According to still a further embodiment, component C) has a density (ISO 1183) in the range of from 910 to 950 kg/m³, preferably in the range of from 920 to 940 kg/m³ and/or a melt flow rate MFR₂ (ISO 1133, 190°C for polyethylene or 230°C for polypropylene, at a load of 2.16 kg) in the range of from 0.5 to 5.0 g/10 min, preferably in the range of from 1.5 to 2.5 g/10 min.

Suitable polyethylene and/or polypropylene containing units originating from maleic acid anhydride which may be used as component C) according to the present invention are commercially available, for example from HOC Hyundai EP Co., Ud. under the tradename Polyglue^{®} GE300C.

### Component D):

The polymer composition according to the invention comprises as component D) 40.0 to 60.0 wt% (based on the overall weight of the polymer composition) of a magnesium hydroxide having a purity of ≥ 95 wt%.

In an embodiment, the present polymer composition comprises as component D) 45.0 to 55.0 wt%, preferably 48.0 to 53.0 wt%, more preferably 49.0 to 51.0 wt% (based on the overall weight of the polyolefin composition) of a magnesium hydroxide having a purity of ≥ 95 wt%.

The magnesium hydroxide used as component D) is preferably a synthetic or precipitated magnesium hydroxide. Precipitated magnesium hydroxides are characterized by their smaller particle size and homogeneous particle size distribution. The main advantage of synthetic or precipitated magnesium hydroxide is that it does not deteriorate the mechanical properties of the polymer matrix.

In an embodiment the magnesium hydroxide used as component D) has a purity of ≥ 96 wt%, preferably of ≥ 97 wt%, more preferably of ≥ 98 wt%, even more preferably of ≥99 wt%.

The magnesium hydroxide used as component D) is (almost) free of impurities that typically can be found in grounded calcium hydroxide that is often used as flame retardance. For example, the amount of SiO₂ is less than 200 ppm, the amount of Al₂O₃, CaO, NiO and Fe₂O₃ is less than 50 ppm in the magnesium hydroxide used as component D).

In a further embodiment, the magnesium hydroxide used as component D) has a particle size d₅₀ of 1.0 to 3.0 µm, preferably 1.5 to 2.5 µm, more preferably 1.6 to 2.0 µm. In addition, the particle size d₁₀ may be 0.6 to 1.2 µm, preferably 0.7 to 1.0 µm, particle size d₉₀ may be 2.2. to 4.6 µm, preferably 2.4 - 4.4 µm.

Furthermore, the magnesium hydroxide used as component D) has a bulk density between 200 and 600 g/l, preferably between 250 and 550 g/l, more preferably between 300 and 500g/l.

The moisture content of the magnesium hydroxide used as component D) may be less than 0.5 %, preferably less than 0.3 % at 105°C.

In another embodiment, the magnesium hydroxide used as component D) has a BET surface area of 3.0 to 7.0 m²/g, preferably 3.5 to 6.5 m²/g, more preferably 4.0 to 6.0 m²/g.

Suitable magnesium hydroxide which may be used as component D) is commercially available, for example from J.M. Huber Corporation under the tradename Magnifin^{®} H-5.

### Component E)

The polymer composition according to the invention comprises as component E) 0.1 to 3.0 wt% (based on the overall weight of the polymer composition) of a silicon fluid and/or silicone gum.

According to an embodiment, the present polymer composition comprises as component E) 0.5 to 2.0 wt%, preferably 0.7 to 1.5 wt%, more preferably 0.9 to 1.3 wt% (based on the overall weight of the polymer composition) of a silicon fluid and/or silicone gum.

In another embodiment of the present polymer composition it is stipulated that component E) is a silicone fluid or silicone gum selected from the group consisting of polysiloxane, preferably polydimethylsiloxane, and siloxanes containing alkoxy or alkyl functional groups and mixtures thereof, preferably component E) is an organo modified siloxane.

According to another preferred embodiment, component E) is an organo polysiloxane polymer comprising chemically combined siloxy units. Preferably, the siloxy units are selected from the group consisting of R₃SiO_{0.5}, R₂SiO, R¹SiO_{1.5}, R¹R₂SiO_{0.5}, RR¹SiO, R¹₂SiO, RSiO_{1.5} and SiO₂ units and mixtures thereof in which each R represents independently a saturated or unsaturated monovalent hydrocarbon Substituent, and each R¹ represents a substituent such as R or a substituent selected from the group consisting of a hydrogen atom, hydroxyl, alkoxy, aryl, vinyl or allyl groups.

Still another preferred embodiment stipulates that component E) is an organo polysiloxane having a viscosity of approximately 600 to 300·10⁶ centipoise at 25°C. An example of an organo polysiloxane which has been found to be suitable is a polydimethylsiloxane having a viscosity of approximately 20·10⁶ centipoise at 25°C.

According to another preferred embodiment of the present invention component E) contains up to 50 wt% by weight of fumed silica fillers of the type commonly used to stiffen silicone rubbers.

Suitable silicone fluids and/or a silicon gums which may be used as component E) are commercially available, for example from Evonik Nutrition & Care GmbH (Germany) as Tegomer^{®} 4042.

### Additives

The polymer composition according to the present invention may also comprise additives. According to a preferred embodiment of the present invention the polymer composition comprises 0.05 to 2.5 wt% (based on the overall weight of the polymer composition), preferably from 0.10 to 1.5 wt%, more preferably from 0.15 to 1.0 wt% of additives selected from the group consisting of slip agents, UV-stabiliser, antioxidants, additive carriers, nucleating agents, mica, scorch retarder and mixtures thereof.

According to a further preferred embodiment of the present invention the polymer composition comprises an antioxidant comprising a sterically hindered phenol group or aliphatic sulphur groups. Such compounds are disclosed in EP 1 254 923 A1 as particularly suitable antioxidants for stabilisation of polyolefin containing hydrolysable silane groups.

Other preferred antioxidants are disclosed in WO 2005/003199 A1. Preferably, the antioxidant is present in the composition in an amount of from 0.01 to 3 wt%, more preferably 0.05 to 2 wt%, and most preferably 0.08 to 1.5 wt% based on the overall weight of the polymer composition.

Examples of antioxidants which are commonly used in the art, are sterically hindered phenols (such as CAS No. 6683-19-8, also sold as Irganox 1010 FF^{™} or Irganox 1024 by BASF), phosphorous based antioxidants (such as CAS No. 31570-04-4, also sold as Hostanox PAR 24 (FF)^{™} by Clariant, or Irgafos 168 (FF)TM by BASF), sulphur based antioxidants (such as CAS No. 693- 36-7, sold as Irganox PS-802 FL^{™} by BASF), nitrogen-based antioxidants (such as 4,4'- bis(1,1'-dimethylbenzyl)diphenylamine), or antioxidant blends. Preferred antioxidants may be Tris (2,4-di-t-butylphenyl) phosphite and/or Octadecyl 3-(3',5'-di-tert. butyl-4-hydroxyphenyl)propionate.

UV-stabilisers are, for example, Bis-(2,2,6,6-tetramethyl-4-piperidyl)-sebacate (CAS -No. 52829-07-9, Tinuvin 770, Tinuvin 783); 2-hydroxy-4-n-octoxy-benzophenone (CAS-No. 1843-05-6, Chimassorb 81). Preferred UV-stabilizers may be low and/or high molecular weight UV stabilizers such as n-Hexadecyl- 3,5-di-t-butyl-4-hydroxybenzoate, A mixture of esters of 2,2,6,6-tetramethyl-4-piperidinol and higher fatty acids (mainly stearic acid) and/or Poly((6-morpholino-s-triazine-2,4-diyl)(1,2,2,6,6-pentamethyl-4-piperidyl)imino)hexameth-ylene (1,2,2,6,6-pentamethyl-4-piperidyl)imino)).

Alpha nucleating agents like sodium benzoate (CAS No. 532-32-1); 1,3:2,4-bis(3,4-dimethylbenzylidene)sorbitol (CAS 135861-56-2, Millad 3988). Suitable antistatic agents are, for example, glycerol esters (CAS No. 97593-29-8) or ethoxylated amines (CAS No. 71786-60-2 or 61791-31-9) or ethoxylated amides (CAS No. 204-393-1). Usually these additives are added in quantities of 100-2.000 ppm for each individual component of the polymer.

In case that the polyolefin composition of the present invention is crosslinked, it may comprise a scorch retarder. The scorch retarder may be a silane containing scorch retarder as described in EP 0 449 939 A1. If applicable, the scorch retarder may be present in the composition in an amount from 0.3 wt% to 5.0 wt% based on the overall weight of the composition.

### Polymer composition

In the following more specific embodiments of the flame retardant polymer composition in accordance with the present invention are described.

In a one embodiment, a polymer composition is provided that comprises the following components:
A) 17.0 to 23.0 wt% based on the overall weight of the polymer composition) of a copolymer of ethylene and alpha olefin comonomer units having from 4 to 10 carbon atoms, which has a density of from 800 to 920 kg/m³, preferably from 860 to 910 kg/m³ (determined according to ISO 1183);
B) 22.0 to 32.0 wt% (based on the overall weight of the polymer composition) of a copolymer of ethylene and alpha olefin comonomer units having from 4 to 10 carbon atoms, which has a density of from 930 to 980 kg/m³, preferably from 940 to 970 kg/m³, more preferably from 945 to 960 kg/m³ (ISO 1183), and a melt flow rate MFR₅ of from 0.05 to 2.50 g/10 min, preferably from 0.1 to 1.0 g/10 min, more preferably from 0.2 to 0.5 g/10 min (ISO 1133 at 190°C and a load of 5.0 kg),
C) 0.7 to 3.0 wt% (based on the overall weight of the polymer composition) of a polyethylene and/or polypropylene containing units originating from maleic acid anhydride;
D) 45.0 to 55.0 wt% (based on the overall weight of the polyolefin composition) of a magnesium hydroxide having a purity of ≥ 95 wt%, preferably of ≥ 97 wt%, more preferably ≥ 98, even more preferably ≥ 99 wt%,
E) 0.5 to 2.0 wt% (based on the overall weight of the polymer composition) of a silicon fluid and/or silicone gum; and
optionally further additives, wherein the sum of all ingredients adds always up to 100 wt%.

In another embodiment, a polymer composition is provided that comprises the following components:
A) 18.0 to 21.0 wt% (based on the overall weight of the polymer composition) of a copolymer of ethylene and alpha olefin comonomer units having from 4 to 10 carbon atoms, which has a density of from 800 to 920 kg/m³, preferably from 860 to 910 kg/m³ (determined according to ISO 1183);
B) 25.0 to 30.0 wt% (based on the overall weight of the polymer composition) of a copolymer of ethylene and alpha olefin comonomer units having from 4 to 10 carbon atoms, which has a density of from 930 to 980 kg/m³, preferably from 940 to 970 kg/m³, more preferably from 945 to 960 kg/m³ (ISO 1183), and a melt flow rate MFR₅ of from 0.05 to 2.50 g/10 min, preferably from 0.1 to 1.0 g/10 min, more preferably from 0.2 to 0.5 g/10 min (ISO 1133 at 190°C and a load of 5.0 kg),
C) 0.8 to 2.0 wt% (based on the overall weight of the polymer composition) of a polyethylene and/or polypropylene containing units originating from maleic acid anhydride;
D) 48.0 to 53.0 wt% (based on the overall weight of the polyolefin composition) of a magnesium hydroxide having a purity of ≥ 95 wt%, preferably of ≥ 97 wt%, more preferably ≥ 98, even more preferably ≥ 99 wt%,
E) 0.7 to 1.5 wt% (based on the overall weight of the polymer composition) of a silicon fluid and/or silicone gum; and
optionally further additives, wherein the sum of all ingredients adds always up to 100 wt%.

In still another embodiment, a polymer composition is provided that comprises the following components:
A) 19.0 to 20.0 wt% (based on the overall weight of the polymer composition) of a copolymer of ethylene and alpha olefin comonomer units having from 4 to 10 carbon atoms, which has a density of from 800 to 920 kg/m³, preferably from 860 to 910 kg/m³ (determined according to ISO 1183);
B) 27.0 to 29.0 wt%, (based on the overall weight of the polymer composition) of a copolymer of ethylene and alpha olefin comonomer units having from 4 to 10 carbon atoms, which has a density of from 930 to 980 kg/m³, preferably from 940 to 970 kg/m³, more preferably from 945 to 960 kg/m³ (ISO 1183), and a melt flow rate MFR₅ of from 0.05 to 2.50 g/10 min, preferably from 0.1 to 1.0 g/10 min, more preferably from 0.2 to 0.5 g/10 min (ISO 1133 at 190°C and a load of 5.0 kg),
C) 0.9 to 1.5 wt% (based on the overall weight of the polymer composition) of a polyethylene and/or polypropylene containing units originating from maleic acid anhydride;
D) 49.0 to 51.0 wt% (based on the overall weight of the polyolefin composition) of a magnesium hydroxide having a purity of ≥ 95 wt%, preferably of ≥ 97 wt%, more preferably ≥ 98, even more preferably ≥ 99 wt%,
E) 0.9 to 1.3 wt% (based on the overall weight of the polymer composition) of a silicon fluid and/or silicone gum; and
optionally further additives, wherein the sum of all ingredients adds always up to 100 wt%.

According to a preferred embodiment, the polymer compositions as listed above are free of any borate, in particular free of any calcium borate, and free of any further metal hydroxide , in particular free of any Al(OH)₃.

It is further preferred, if the present polymer compositions according to the above listed embodiments are free of any ethylene-acrylate-copolymer.

### Article, in particular wire or cable

The polymer composition of the invention is used to manufacture an article, in particular a wire or cable comprising at least one layer comprising said polymer composition.

The polymer composition in accordance with the present invention can be extruded around a wire or cable to form an insulating or jacketing layer or can be used as bedding compounds. The polymer compositions are then optionally crosslinked.

According to a preferred embodiment the wire or cable comprises an insulation layer, preferably comprising or consisting of a material selected from the group consisting of crosslinked or thermoplastic polyethylene, thermoplastic polypropylene or flame retardant polyolefins. Suitable flame retardant polyolefins are inter alia described in WO 2013/159942 A2. Suited thermoplastic insulations are for example disclosed in WO 2007/137711 A1 or WO 2013/1599442 A2 and are commercially available for example from Borealis AG (Austria) under the tradenames FR4802, FR4803, FR4807, FR6082, FR6083 and FR4804. Commercially available crosslinkable insulation materials are also available from Borealis AG (Austria) under the tradenames FR4850 and FR4851.

An insulation layer of a low voltage power cable may have a thickness in the range of 0.4 mm to 3.0 mm, preferably below 2.0 mm, depending on the application. Preferably, the insulation is directly coated onto the electric conductor.

In a preferred embodiment, the flame retardant polymer composition according to the invention is comprised in the jacketing layer of a wire or cable, preferably in the jacketing layer of medium voltage (MW) or high voltage (HV) cable. MW and HV cables generally have a conductor, which is surrounded by an inner semiconductive layer, followed by an insulation layer, then an outer semiconductive layer and a jacketing layer as protective outer layer. MW and HV cables mainly differ in the thickness of the insulation layer. MW cables are usually classified for a maximum permitted voltage Um of 1 kV to 36 kV. HW cables are usually classified for a maximum permitted voltage Um of 36 kV to 230 kV.

All preferred aspects and embodiments as described above shall also hold for the wire or cable according to the present invention.

### Experimental Section

The following Examples are included to demonstrate certain aspects and embodiments of the invention as described in the claims. It should be appreciated by those of skill in the art, however, that the following description is illustrative only and should not be taken in any way as a restriction of the invention.

### A. Test Methods

The following definitions of terms and determination methods apply for the above general description of the invention as well as to the below examples unless otherwise defined.

### Melt Flow Rate (MFR)

The MFR was measured according to ISO 1133 (Davenport R-1293 from Daventest Ud). MFR values were measured atdifferent loads 2.16 kg (MFR₂), 5 kg (MFR₅) at 190°C, and at 21.6 kg (MFR₂₁) at 150°C or 190°C.

### Density

The density was measured according to ISO 1183-1 - method A (2019). Sample preparation was done by compression molding in accordance with ISO 1872-2:2007.

### Limiting Oxygen Index

Limiting oxygen index (LOI) was performed by following a test method based on ASTM D 2863-87 and ISO 4589 [38]. 10 test specimens for LOI were stamped out of previously mentioned pressed plaques. The test specimens were 12.5 ± 0.5 mm long. Lines were drawn at 50 mm, measured from the top of the sticks. The samples sticks were placed vertically in a glass container with a predetermined atmosphere of oxygen and nitrogen. The samples were exposed to the predetermined atmosphere for at least 30 seconds before ignition. The sticks were ignited on the very top of the specimen during contact with an external flame for five seconds. If the stick was still burning after three minutes or if the flame had burned down past the measured 50 mm, the test had failed. Different ratios of oxygen and nitrogen were tested until the specimen passed the test and the current percentage of oxygen was recorded.

### Manufacturing of tape used for determination of tensile strength and elongation at break

For determining the tensile strength and elongation at break, tapes (1.8 mm ) were produced on a Collin Teachline E20T tape extruder with a 4.2:1, 200 compression screw with a 20 mm diameter. The temperature profile was 150/160/170°C and the screw speed was 55 rpm.

### Tensile Testing

Tensile testing was executed in accordance with ISO 527-1 and ISO 527-2 using an Alwetron TCT 10 tensile tester. Ten test specimen were punched from a plaque using ISO 527-2/5A specimen and placed in a climate room with relative humidity of 50± 5% at a temperature of 23°C for at least 16 hours before the test. The test specimen were placed vertically between clamps with a distance of 50± 2 mm, extensometer clamps with a distance of 20 mm and a load cell of 1 kN. Before the test was carried out, the exact width and thickness for every sample was measured and recorded. Each sample rod was tensile tested with a constant speed of 50 mm/min until breakage and at least 6 approved parallels were performed. In highly filled systems, there is generally a big variation of the results and therefore the median value was used to extract a single value for elongation at break (%) and tensile strength (MPa).

### Median Particle Size (d₅₀)

Median particle size of metal hydroxide can be measured by laser diffraction (IS013320), dynamic light scattering (IS022412) or sieve analysis (ASTMD1921-06). For the metal hydroxides used in the working examples, the determination of the median particle size d₅₀ was conducted by laser diffraction. Any limitation of the claims shall refer to values obtained from laser diffraction (IS013320).

### BET surface

The BET surface is determined in accordance with ISO 9277 (2010).

### B. Materials used

### Component A)

"VLDPE" is a very low density copolymer of polyethylene and 1-octene having a density of 883 kg/m³ and a MFR₂ of 1.1 g/10 min, (2.16 kg, 190°C) commercially available as Queo 8201 from Borealis AG (Austria).

### Component B)

"HDPE" is a high density copolymer of ethylene and 1-hexene having a density of 958 kg/m³ and a MFR₅ of 0.25 g/10 min, commercially available as HE3490-LS-HP from Borealis AG (Austria).

### Component C)

"PE-MAH" is a polyethylene grafted with maleic acid anhydride (maleic acid anhydride content = 0.5 to 1.0 wt.-%, MFR₂ = 2.0 g/10 min, density =930 kg/m³) commercially available from HOC Hyundai EP Co., Ud. under the tradename Polyglue^{®} GE300C.

### Component D)

"MDH" is a synthetic magnesium hydroxide (Magnifin^{®} H-5, commercially available from J.M. Huber Corporation) with a purity of ≥ 99.8 wt%, a particle size d₅₀ of 1.6 to 2.0 µm, a bulk density of 300 - 500g/l, moisture content of less than 0.3 % at 105°C and a BET surface area of 4.0 to 6.0 m²/g.

"MDH-1" is a brucite (ground magnesium hydroxide) (Ecopiren^{®} 3.5C) produced and commercially available by Europiren B.V (Netherlands) having a d₅₀ of 3-4 µm, a BET surface area in the range of 9-11 m²/g and is coated with 1.2 - 1.5 wt% of stearic acid. The chemical composition is: Mg(OH)₂ > 92.8 wt%, CaO < 2,3 wt%, SiO2 < 1.3 wt% and Fe₂O₃ < 0.13 wt%.

"MDH-2" ground magnesium hydroxide (Hydrofy GS ^{®}) commercially available from Nuova Sima (Italy) having a d₅₀ of 3.5 µm. The chemical composition is: Mg(OH)₂ 89-92 wt%.

### Component E)

"OMS" is a pure liquid containing 50 wt% of an organo modified siloxane in 50 wt% in a LDPE matrix, commercially available from Evonik Nutrition & Care GmbH (Germany) as Tegomer^{®} 4042.

### Further components

AO1 and AO2 are a high molecular weight sterically hindered phenolic antioxidant, commercially available from BASF SE as Irganox 1010 and Irganox 1024.

LS is a light stabilizer (i.e. UV-stabiliser) commercially available from BASF SE as Tinuvin 783.

### C) Preparation of the polymer compositions

The polymer compositions according to the inventive examples (IE1 to IE2 and for comparative examples (CE1 to CE3) were produced by mixing the components together in a co-kneader. The compounds were done with screw speed of around 110-125 rpm and a set temperature of 180°C in zone 1 and 130-160°C in zone 2. The mass temperature at the end was around 215°C. The filler feeding was splitted in 2 inlets, 1/3 in the first inlet, 2/3 in the later inlet.

The amounts of the different components in the polymer compositions and the properties of the polymer compositions according to the inventive examples and the comparative examples can be gathered from Table 1 below.

**Table 1: Polymer compositions and properties.**

| | **unit** | **CE1** | **CE2** | **CE3** | **IE1** | **IE2** |
|---|---|---|---|---|---|---|
| VLDPE | wt% | 19.50 | 11.0 | 16.0 | 19.50 | 19.30 |
| HDPE | wt% | 27.95 | 28.15 | 27.95 | 27.95 | 28.15 |
| PE-MAH | wt% | 1.0 | 2.0 | 4.0 | 1.0 | 1.0 |
| MDH-2 | wt% | 50.0 | | 50.0 | | |
| MDH | wt% | | | | 50.0 | 50.0 |
| MDH-1 | wt% | | 50.0 | | | |
| AO1 | wt% | 0.3 | 0.2 | 0.3 | 0.3 | 0.3 |
| AO2 | wt% | 0.1 | | 0.1 | 0.1 | 0.1 |
| LS | wt% | 0.15 | 0.15 | 0.15 | 0.15 | 0.15 |
| OMS | | 1.0 | 1.0 | 1.0 | 1.0 | 1.0 |
| | | | | | | |
| MFR (150/21.6) | g/10 min | 3.0 | 4.6 | 2.12 | 2.96 | |
| MFR(190, 21.6) | g/10 min | | | | | 5.5 |
| Tensile strength | MPa | 11.8 | 14.8 | 14.7 | 16.0 | 14.9 |
| Elongation at break | % | 462 | 469 | 423 | 550 | 514 |
| LOI | | 28.5 | 28.0 | 29.0 | 32.0 | 31.0 |
| Surface finish | | Smooth matt | Smooth matt | Smooth matt | Smooth shiny | Smooth shiny |

### D) Discussion of the results

As can be gathered from Table 1 the polymer compositions according to the invention (IE1 to IE2) have compared to the polymer composition according to CE1-CE3 better flame retardant properties expressed by a higher LOI. Moreover, it can be seen that the polymer compositions according to the invention also have better surface properties (smooth shiny vs. smooth matt for the comparative examples).

It can be seen that MDH being a precipitated magnesium hydroxide as component D has a very positive effect on the flame retardant properties and surface properties. Even if the polymer compositions according to CE1 - CE3 comprising MDH-1 and MDH-2 being also magnesium hydroxides but ground materials the flame retardant properties of the polymer compositions according the inventive examples IE1 to IE2 are better.

In addition, IE1-IE2 show an increased elongation at break than the comparative examples CE1-CE3.

## Claims

1. A flame retardant polymer composition comprising
(A) 15.0 to 25.0 wt% (based on the overall weight of the polymer composition) of a copolymer of ethylene and alpha olefin comonomer units having from 4 to 10 carbon atoms, which has a density of from 800 to 920 kg/m³ (ISO 1183);
(B) 20.0 to 35.0 wt% (based on the overall weight of the polymer composition) of a copolymer of ethylene and alpha olefin comonomer units having from 4 to 10 carbon atoms, which has a density of from 930 to 980 kg/m³ (ISO 1183), and a melt flow rate MFR₅ of from 0.05 to 2.50 g/10 min (ISO 1133 at 190°C and a load of 5.0 kg);
(C) 0.5 to 4.0 wt% (based on the overall weight of the polymer composition) of a polyethylene and/or polypropylene containing units originating from maleic acid anhydride;
(D) 40.0 to 60.0 wt% (based on the overall weight of the polymer composition) of a magnesium hydroxide having a purity of ≥ 95 wt%,
(E) 0.1 to 3.0 wt% (based on the overall weight of the polymer composition) of a silicon fluid and/or silicone gum; and
optionally further additives, wherein the sum of all ingredients adds always up to 100 wt%.

2. Flame retardant polymer composition according to claim 1, **characterized by** a limiting oxygen index (LOI) (ASTM D 2863-87; ISO 4589) of ≥ 30, preferably ≥ 31, more preferably ≥ 32, in particular in a range between 30 and 40, more in particular in a range between 31 and 38, even more in particular in a range between 31 and 34.

3. Flame retardant polymer composition according to claim 1 or 2, **characterized by** an elongation at break (ISO 527-1, ISO 527-2) of ≥ 480 %, preferably ≥ 500 %, more preferably ≥ 510 %, even more preferably ≥ 520 %, still more preferably ≥ 530 % or ≥ 540 %, in particular in a range between 480 and 650 %, more in particular in a range between 500 and 600 %, even more in particular in a range between 510 and 580 %.

4. Flame retardant polymer composition according to one of the preceding claims **characterized by** a melt flow rate MFR₂₁ (ISO 1133, 21.6 kg, 190°C) of at least 4.0 g/10 min, preferably at least 4.5 g/10 min, more preferably at least 5.0 g/ 10 min, in particular in the range between 4.0 and 7.0 g/10 min, preferably between 4.5 and 6.5 g/10min, more preferably between 5.0 and 6.0 g/10min or by a melt flow rate MFR₂₁ (ISO 1133, 21.6 kg, 150°C) of at least 2.0 g/10 min, preferably at least 2.5 g/10 min, more preferably at least 2.8 g/ 10 min, in particular in the range between 2.0 and 5.0 g/10 min, preferably between 2.5 and 4.5 g/10min, more preferably between 2.8 and 4.5.g/10min;.

5. Flame retardant polymer composition according to one of the preceding claims **characterized by** a tensile strength at 23°C (50 mm/min, ISO 527-2) of at least 10.0 MPa, preferably of at least 12.0 MPa, more preferably of at least 14.0 MPa, in particular in a range between 10.0 and 25.0 MPa, more in particular in a range between 12.0 and 18.0 MPa.

6. Flame retardant polymer composition according to one of the preceding claims, **characterized in that** component (D) is a magnesium hydroxide having a purity of ≥ 96 wt%, preferably of ≥ 97 wt%, more preferably of ≥ 98 wt%, even more preferably of ≥99 wt%, preferably being a precipitated magnesium hydroxide.

7. Flame retardant polymer composition according to one of the preceding claims **characterized in that** component (D) is a magnesium hydroxide having a particle size d₅₀ of 1.0 to 3.0 µm, preferably 1.5 to 2.5 µm, more preferably 1.6 to 2.0 µm and BET of 3.0 to 7.0 m²/g, preferably 3.5 to 6.5 m²/g, more preferably 4.0 to 6.0 m²/g.

8. Flame retardant polymer composition according to one of the preceding claims **characterized in that** the component (A) is a copolymer of ethylene and 1-octene.

9. Flame retardant polymer composition according to one of the preceding claims **characterized in that** the component (B) is a copolymer of ethylene and 1-hexene.

10. Flame retardant polymer composition according to one of the preceding claims **characterized in that** the component (C) has a density (ISO 1183) in the range of from 910 to 950 kg/m³, preferably in the range of from 920 to 940 kg/m³ and/or a melt flow rate MFR₂ (ISO 1133, 190°C for polyethylene or 230°C for polypropylene, a load of 2.16 kg) in the range of from 0.5 to 5.0 g/10 min, preferably in the range of from 1.5 to 2.5 g/10 min.

11. Flame retardant polymer composition according to one of the preceding claims **characterized in that** the component (E) is a silicone fluid or silicone gum selected from the group consisting of polysiloxane, preferably polydimethylsiloxane, and siloxanes containing alkoxy or alkyl functional groups and mixtures thereof, preferably component (E) is an organo modified siloxane.

12. Flame retardant polymer composition according to one of the preceding claims comprising
(A) 17.0 to 23.0 wt%, preferably 18.0 to 21.0 wt%, more preferably 19.0 to 20.0 wt% based on the overall weight of the polymer composition) of a copolymer of ethylene and alpha olefin comonomer units having from 4 to 10 carbon atoms, which has a density of from 800 to 920 kg/m³, preferably from 860 to 910 kg/m³ (determined according to ISO 1183);
(B) 22.0 to 32.0 wt%; preferably 25.0 to 30.0 wt%, more preferably 27.0 to 29.0 wt%, (based on the overall weight of the polymer composition) of a copolymer of ethylene and alpha olefin comonomer units having from 4 to 10 carbon atoms, which has a density of from 930 to 980 kg/m³, preferably from 940 to 970 kg/m³, more preferably from 945 to 960 kg/m³ (ISO 1183), and a melt flow rate MFR₅ of from 0.05 to 2.50 g/10 min, preferably from 0.1 to 1.0 g/10 min, more preferably from 0.2 to 0.5 g/10 min (ISO 1133 at 190°C and a load of 5.0 kg),
(C) 0.7 to 3.0 wt%, preferably 0.8 to to 2.0 wt%, more preferably 0.9 to 1.5 wt% (based on the overall weight of the polymer composition) of a polyethylene and/or polypropylene containing units originating from maleic acid anhydride;
(D) 45.0 to 55.0 wt%, preferably 48.0 to 53.0 wt%, more preferably 49.0 to 51.0 wt% (based on the overall weight of the polyolefin composition) of a magnesium hydroxide having a purity of ≥ 95 wt%,
(E) 0.5 to 2.0 wt%, preferably 0.7 to 1.5 wt%, more preferably 0.9 to 1.3 wt% (based on the overall weight of the polymer composition) of a silicon fluid and/or silicone gum; and
optionally further additives, wherein the sum of all ingredients adds always up to 100 wt%.

13. Flame retardant polymer composition according to one of the preceding claims comprising 0.05 to 2.5 wt% (based on the overall weight of the polymer composition), preferably from 0.10 to 1.5 wt%, more preferably from 0.15 to1.0 wt% of additives selected from the group consisting of slip agents, UV- stabiliser, antioxidants, additive carriers, nucleating agents, mica, scorch retarder and mixtures thereof.

14. An article comprising the flame retardant polymer composition according to one of preceding the claims.

15. Article according to claim 14, being a wire or cable comprising at least one layer comprising said flame retardant polymer composition according to one of claims 1 to 13, preferably a medium voltage or high voltage cable comprising at least one layer comprising said flame retardant polymer composition according to one of claims 1 to 13.

## Patentansprüche

1. Eine flammhemmende Polymerzusammensetzung, umfassend
(A) 15,0 bis 25,0 Gew.-% (bezogen auf das Gesamtgewicht der Polymerzusammensetzung) eines Copolymers aus Ethylen und Alpha-Olefin-Comonomereinheiten mit 4 bis 10 Kohlenstoffatomen, das eine Dichte von 800 bis 920 kg/m³ (ISO 1183) aufweist;
(B) 20,0 bis 35,0 Gew.-% (bezogen auf das Gesamtgewicht der Polymerzusammensetzung) eines Copolymers aus Ethylen und Alpha-Olefin-Comonomereinheiten mit 4 bis 10 Kohlenstoffatomen, das eine Dichte von 930 bis 980 kg/m³ (ISO 1183) und einen Schmelzflussrate MFR₅ von 0,05 bis 2,50 g/10 min (ISO 1133 bei 190 °C und einer Belastung von 5,0 kg) aufweist;
(C) 0,5 bis 4,0 Gew.-% (bezogen auf das Gesamtgewicht der Polymerzusammensetzung) eines Polyethylens und/oder Polypropylens, das Einheiten enthält, die von Maleinsäureanhydrid stammen;
(D) 40,0 bis 60,0 Gew.-% (bezogen auf das Gesamtgewicht der Polymerzusammensetzung) eines Magnesiumhydroxids mit einer Reinheit von ≥ 95 Gew.-%,
(E) 0,1 bis 3,0 Gew.-% (bezogen auf das Gesamtgewicht der Polymerzusammensetzung) eines Silikonfluids und/oder Silikongummis; und
gegebenenfalls weitere Additive, wobei die Summe aller Bestandteile stets 100 Gew.- % ergibt.

2. Flammhemmende Polymerzusammensetzung nach Anspruch 1, **gekennzeichnet durch** einen Sauerstoffgrenzindex (LOI) (ASTM D 2863-87; ISO 4589) von ≥ 30, vorzugsweise ≥ 31, noch bevorzugter ≥ 32, insbesondere in einem Bereich zwischen 30 und 40, noch insbesondere in einem Bereich zwischen 31 und 38, am meisten insbesondere in einem Bereich zwischen 31 und 34.

3. Flammhemmende Polymerzusammensetzung nach Anspruch 1 oder 2, **gekennzeichnet durch** eine Bruchdehnung (ISO 527-1, ISO 527-2) von ≥ 480 %, vorzugsweise ≥ 500 %, noch bevorzugter von ≥ 510 %, am meisten bevorzugt von ≥ 520 %, am allermeisten bevorzugt von ≥ 530 % oder ≥ 540 %, insbesondere in einem Bereich zwischen 480 und 650 %, noch insbesondere in einem Bereich zwischen 500 und 600 %, am meisten insbesondere in einem Bereich zwischen 510 und 580 %.

4. Flammhemmende Polymerzusammensetzung nach einem der vorstehenden Ansprüche, **gekennzeichnet durch** eine Schmelzflussrate MFR₂₁ (ISO 1133, 21,6 kg, 190 °C) von mindestens 4,0 g/10 min, vorzugsweise mindestens 4,5 g/10 min, noch bevorzugter von mindestens 5,0 g/10 min, insbesondere im Bereich zwischen 4,0 und 7,0 g/10 min, vorzugsweise zwischen 4,5 und 6,5 g/10 min, noch bevorzugter zwischen 5,0 und 6,0 g/10 min, oder durch eine Schmelzflussrate MFR₂₁ (ISO 1133, 21,6 kg, 150 °C) von mindestens 2,0 g/10 min, vorzugsweise mindestens 2,5 g/10 min, noch bevorzugter mindestens 2,8 g/10 min, insbesondere im Bereich zwischen 2,0 und 5,0 g/10 min, vorzugsweise zwischen 2,5 und 4,5 g/10 min, noch bevorzugter zwischen 2,8 und 4,5 g/10 min.

5. Flammhemmende Polymerzusammensetzung nach einem der vorstehenden Ansprüche, **gekennzeichnet durch** eine Zugfestigkeit bei 23 °C (50 mm/min, ISO 527-2) von mindestens 10,0 MPa, vorzugsweise von mindestens 12,0 MPa, noch bevorzugter von mindestens 14,0 MPa, insbesondere in einem Bereich zwischen 10,0 und 25,0 MPa, am meisten bevorzugt in einem Bereich zwischen 12,0 und 18,0 MPa.

6. Flammhemmende Polymerzusammensetzung nach einem der vorstehenden Ansprüche, **dadurch gekennzeichnet, dass** Komponente (D) ein Magnesiumhydroxid mit einer Reinheit von ≥ 96 Gew.-%, vorzugsweise von ≥ 97 Gew.-%, noch bevorzugter von ≥ 98 Gew.-%, am meisten bevorzugt von ≥ 99 Gew.-% ist, wobei es vorzugsweise ein ausgefälltes Magnesiumhydroxid ist.

7. Flammhemmende Polymerzusammensetzung nach einem der vorstehenden Ansprüche, **dadurch gekennzeichnet, dass** Komponente (D) ein Magnesiumhydroxid mit einer Partikelgröße d₅₀ von 1,0 bis 3,0 µm, vorzugsweise 1,5 bis 2,5 µm, noch bevorzugter 1,6 bis 2,0 µm und einem BET-Wert von 3,0 bis 7,0 m² /g, vorzugsweise 3,5 bis 6,5 m² /g, noch bevorzugter 4,0 bis 6,0 m² /g ist.

8. Flammhemmende Polymerzusammensetzung nach einem der vorstehenden Ansprüche, **dadurch gekennzeichnet, dass** die Komponente (A) ein Copolymer aus Ethylen und 1-Octen ist.

9. Flammhemmende Polymerzusammensetzung nach einem der vorstehenden Ansprüche, **dadurch gekennzeichnet, dass** die Komponente (B) ein Copolymer aus Ethylen und 1-Hexen ist.

10. Flammhemmende Polymerzusammensetzung nach einem der vorstehenden Ansprüche, **dadurch gekennzeichnet, dass** die Komponente (C) eine Dichte (ISO 1183) im Bereich von 910 bis 950 kg/m³, vorzugsweise im Bereich von 920 bis 940 kg/m³, und/oder einen Schmelzflussrate MFR₂ (ISO 1133, 190 °C für Polyethylen oder 230 °C für Polypropylen nach , Belastung 2,16 kg) im Bereich von 0,5 bis 5,0 g/10 min, vorzugsweise im Bereich von 1,5 bis 2,5 g/10 min aufweist.

11. Flammhemmende Polymerzusammensetzung nach einem der vorstehenden Ansprüche, **dadurch gekennzeichnet, dass** die Komponente (E) ein Silikonfluid oder ein Silikongummi ist, ausgewählt aus der Gruppe bestehend aus Polysiloxan, vorzugsweise Polydimethylsiloxan, und Siloxanen, die Alkoxy- oder Alkylfunktionsgruppen enthalten, sowie Mischungen davon, wobei die Komponente (E) vorzugsweise ein organisch modifiziertes Siloxan ist.

12. Flammhemmende Polymerzusammensetzung nach einem der vorstehenden Ansprüche, umfassend
(A) 17,0 bis 23,0 Gew.-%, vorzugsweise 18,0 bis 21,0 Gew.-%, noch bevorzugter 19,0 bis 20,0 Gew.-%, bezogen auf das Gesamtgewicht der Polymerzusammensetzung, eines Copolymers aus Ethylen und Alpha-Olefin-Comonomereinheiten mit 4 bis 10 Kohlenstoffatomen, das eine Dichte von 800 bis 920 kg/m³, vorzugsweise von 860 bis 910 kg/m³ (bestimmt gemäß ISO 1183) aufweist;
(B) 22,0 bis 32,0 Gew.-%; vorzugsweise 25,0 bis 30,0 Gew.-%, noch bevorzugter 27,0 bis 29,0 Gew.-% (bezogen auf das Gesamtgewicht der Polymerzusammensetzung) eines Copolymers aus Ethylen und Alpha-Olefin-Comonomereinheiten mit 4 bis 10 Kohlenstoffatomen, das eine Dichte von 930 bis 980 kg/m³, vorzugsweise von 940 bis 970 kg/m³, noch bevorzugter von 945 bis 960 kg/m³ (ISO 1183), und einen Schmelzflussrate MFR₅ von 0,05 bis 2,50 g/10 min, vorzugsweise von 0,1 bis 1,0 g/10 min, noch bevorzugter von 0,2 bis 0,5 g/10 min (ISO 1133 bei 190 °C und einer Belastung von 5,0 kg) aufweist,
(C) 0,7 bis 3,0 Gew.-%, vorzugsweise 0,8 bis 2,0 Gew.-%, noch bevorzugter 0,9 bis 1,5 Gew.-% (bezogen auf das Gesamtgewicht der Polymerzusammensetzung) eines Polyethylens und/oder Polypropylens, das Einheiten enthält, die von Maleinsäureanhydrid stammen;
(D) 45,0 bis 55,0 Gew.-%, vorzugsweise 48,0 bis 53,0 Gew.-%, noch bevorzugter 49,0 bis 51,0 Gew.-% (bezogen auf das Gesamtgewicht der Polyolefinzusammensetzung) eines Magnesiumhydroxids mit einer Reinheit von ≥ 95 Gew.-%,
(E) 0,5 bis 2,0 Gew.-%, vorzugsweise 0,7 bis 1,5 Gew.-%, noch bevorzugter 0,9 bis 1,3 Gew.-% (bezogen auf das Gesamtgewicht der Polymerzusammensetzung) eines Silikonfluids und/oder Silikongummis; und
gegebenenfalls weitere Additive, wobei die Summe aller Bestandteile stets 100 Gew.- % ergibt.

13. Flammhemmende Polymerzusammensetzung gemäß einem der vorstehenden Ansprüche, umfassend 0,05 bis 2,5 Gew.-% (bezogen auf das Gesamtgewicht der Polymerzusammensetzung), vorzugsweise 0,10 bis 1,5 Gew.-%, noch bevorzugter 0,15 bis 1,0 Gew.-% an Additiven, ausgewählt aus der Gruppe bestehend aus Gleitmitteln, UV-Stabilisatoren, Antioxidantien, Additivträgern, Nukleierungsmitteln, Glimmer, Anbrennhemmern und Mischungen davon.

14. Ein Gegenstand, der die flammhemmende Polymerzusammensetzung gemäß einem der vorstehenden Ansprüche umfasst.

15. Gegenstand nach Anspruch 14, in Form eines ein Drahtes oder Kabels mindestens eine Schicht umfassend, die die flammhemmende Polymerzusammensetzung gemäß einem der Ansprüche 1 bis 13 enthält, vorzugsweise ein Mittelspannungs- oder Hochspannungskabel, das mindestens eine Schicht umfasst, die die flammhemmende Polymerzusammensetzung gemäß einem der Ansprüche 1 bis 13 enthält.

## Revendications

1. Composition polymère ignifuge comprenant
(A) 15,0 à 25,0 % en poids (par rapport au poids total de la composition polymère) d'un copolymère d'unités comonomères d'éthylène et d'alpha-oléfine comportant de 4 à 10 atomes de carbone, qui a une densité comprise entre 800 et 920 kg/m³ (ISO 1183) ;
(B) 20,0 à 35,0 % en poids (par rapport au poids total de la composition polymère) d'un copolymère d'unités comonomères d'éthylène et d'alpha-oléfine comportant de 4 à 10 atomes de carbone, qui a une densité comprise entre 930 et 980 kg/m³ (ISO 1183), et un indice de fluidité à chaud MFR₅ compris entre 0,05 et 2,50 g/10 min (ISO 1133 à 190 °C et sous une charge de 5,0 kg) ;
(C) 0,5 à 4,0 % en poids (par rapport au poids total de la composition polymère) d'un polyéthylène et/ou d'un polypropylène contenant des unités dérivés de l'anhydride d'acide maléique ;
(D) 40,0 à 60,0 % en poids (par rapport au poids total de la composition polymère) d'un hydroxyde de magnésium présentant une pureté de ≥ 95 % en poids ;
(E) 0,1 à 3,0 % en poids (par rapport au poids total de la composition polymère) d'un fluide de silicone et/ou d'une gomme de silicone ; et
éventuellement d'autres additifs, la somme de tous les ingrédients s'élevant toujours à 100 % en poids.

2. Composition polymère ignifuge selon la revendication 1, **caractérisée par** un indice de limite d'oxygène (LOI) (ASTM D 2863-87 ; ISO 4589) de ≥ 30, de préférence ≥ 31, plus préférablement ≥ 32, en particulier dans une plage comprise entre 30 et 40, plus particulièrement dans une plage comprise entre 31 et 38, et plus particulièrement encore dans une plage comprise entre 31 et 34.

3. Composition polymère ignifuge selon la revendication 1 ou 2, **caractérisée par** un allongement à la rupture (ISO 527-1, ISO 527-2) de ≥ 480 %, de préférence de ≥ 500 %, plus préférablement de ≥ 510 %, encore plus préférablement de ≥ 520 %, et mieux encore de ≥ 530 % ou de ≥ 540 %, en particulier dans une plage comprise entre 480 et 650 %, plus particulièrement dans une plage comprise entre 500 et 600 %, et encore plus particulièrement dans une plage comprise entre 510 et 580 %.

4. Composition polymère ignifuge selon l'une des revendications précédentes, **caractérisée par** un indice de fluidité à chaud MFR₂₁ (ISO 1133, 21,6 kg, 190 °C) d'au moins 4,0 g/10 min, de préférence d'au moins 4,5 g/10 min, plus préférablement d'au moins 5,0 g/10 min, en particulier dans la plage comprise entre 4,0 et 7,0 g/10 min, de préférence entre 4,5 et 6,5 g/10 min, plus préférablement entre 5,0 et 6,0 g/10 min, ou par un indice de fluidité à chaud MFR₂₁, (ISO 1133, 21,6 kg, 150 °C) d'au moins 2,0 g/10 min, de préférence d'au moins 2,5 g/10 min, plus préférablement d'au moins 2,8 g/10 min, en particulier dans la plage comprise entre 2,0 et 5,0 g/10 min, de préférence entre 2,5 et 4,5 g/10 min, plus préférablement entre 2,8 et 4,5 g/10 min ;.

5. Composition polymère ignifuge selon l'une des revendications précédentes, **caractérisée par** une résistance à la traction à 23 °C (50 mm/min, ISO 527-2) d'au moins 10,0 MPa, de préférence d'au moins 12,0 MPa, plus préférablement d'au moins 14,0 MPa, en particulier dans une plage comprise entre 10,0 et 25,0 MPa, plus particulièrement dans une plage comprise entre 12,0 et 18,0 MPa.

6. Composition polymère ignifuge selon l'une des revendications précédentes, **caractérisée en ce que** le composant (D) est un hydroxyde de magnésium ayant une pureté de ≥ 96 % en poids, de préférence de ≥ 97 % en poids, plus préférablement de ≥ 98 % en poids, et encore plus préférablement de ≥ 99 % en poids, de préférence sous forme d'hydroxyde de magnésium précipité.

7. Composition polymère ignifuge selon l'une des revendications précédentes, **caractérisée en ce que** le composant (D) est un hydroxyde de magnésium présentant une taille de particules d₅₀ comprise entre 1,0 et 3,0 µm, de préférence entre 1,5 et 2,5 µm, plus préférablement entre 1,6 et 2,0 µm, et une surface spécifique BET comprise entre 3,0 et 7,0 m²/g, de préférence de 3,5 à 6,5 m²/g, et plus préférablement de 4,0 à 6,0 m²/g.

8. Composition polymère ignifuge selon l'une des revendications précédentes, **caractérisée en ce que** le composant (A) est un copolymère d'éthylène et de 1-octène.

9. Composition polymère ignifuge selon l'une des revendications précédentes, **caractérisée en ce que** le composant (B) est un copolymère d'éthylène et de 1-hexène.

10. Composition polymère ignifuge selon l'une des revendications précédentes, **caractérisée en ce que** le composant (C) présente une densité (ISO 1183) dans la plage de 910 à 950 kg/m³, de préférence dans la plage de 920 á 940 kg/m³, et/ou un indice de fluidité à chaud MFR₂ (ISO 1133, 190 °C pour le polyéthylène ou 230 °C pour le polypropylène, une charge de 2,16 kg) dans la plage de 0,5 à 5,0 g/10 min, de préférence dans la plage de 1,5 à 2,5 g/10 min.

11. Composition polymère ignifuge selon l'une des revendications précédentes, **caractérisée en ce que** le composant (E) est un fluide de silicone ou une gomme de silicone choisi parmi le groupe constitué de polysiloxane, de préférence de polydiméthylsiloxane, et des siloxanes contenant des groupes fonctionnels alcoxy ou alkyle, ainsi que leurs mélanges ; de préférence, le composant (E) est un siloxane modifié organiquement.

12. Composition polymère ignifuge selon l'une des revendications précédentes, comprenant
(A) 17,0 à 23,0 % en poids, de préférence 18,0 à 21,0 % en poids, plus préférablement de 19,0 à 20,0 % en poids par rapport au poids total de la composition polymère) d'un copolymère d'unités comonomères d'éthylène et d'alpha-oléfine comportant de 4 à 10 atomes de carbone, qui présente une densité comprise entre 800 et 920 kg/m³, de préférence entre 860 et 910 kg/m³ (déterminée selon ISO 1183) ;
(B) 22,0 à 32,0 % en poids ; de préférence de 25,0 à 30,0 % en poids, plus préférablement de 27,0 à 29,0 % en poids (par rapport au poids total de la composition polymère) d'un copolymère d'unités comonomères d'éthylène et d'alpha-oléfine comportant de 4 à 10 atomes de carbone, qui présente une densité comprise entre 930 et 980 kg/m³, de préférence de 940 à 970 kg/m³, plus préférablement de 945 à 960 kg/m³ (ISO 1183), et un indice de fluidité à chaud MFR₅ compris entre 0,05 et 2,50 g/10 min, de préférence entre 0,1 et 1,0 g/10 min, plus préférablement entre 0,2 et 0,5 g/10 min (ISO 1133 à 190 °C et sous une charge de 5,0 kg) ;
(C) 0,7 à 3,0 % en poids, de préférence 0,8 à 2,0 % en poids, plus préférablement 0,9 à 1,5 % en poids (par rapport au poids total de la composition polymère) d'un polyéthylène et/ou d'un polypropylène contenant des unités dérivées de l'anhydride d'acide maléique ;
(D) 45,0 à 55,0 % en poids, de préférence 48,0 à 53,0 % en poids, plus préférablement 49,0 à 51,0 % en poids (par rapport au poids total de la composition de polyoléfine) d'un hydroxyde de magnésium présentant une pureté de ≥ 95 % en poids ;
(E) 0,5 à 2,0 % en poids, de préférence 0,7 à 1,5 % en poids, plus préférablement 0,9 à 1,3 % en poids (par rapport au poids total de la composition polymère) d'un fluide de silicone et/ou d'une gomme de silicone ; et
éventuellement d'autres additifs, la somme de tous les ingrédients s'ajoutant toujours à 100 % en poids.

13. Composition polymère ignifuge selon l'une des revendications précédentes, comprenant 0,05 à 2,5 % en poids (par rapport au poids total de la composition polymère), de préférence de 0,10 à 1,5 % en poids, plus préférablement de 0,15 à 1,0 % en poids d'additifs choisis dans le groupe constitué par les agents de glissement, des stabilisants UV, des antioxydants, des supports d'additifs, des agents de nucléation, du mica, des retardateurs de scorch et de leurs mélanges.

14. Article comprenant la composition polymère ignifuge selon l'une des revendications précédentes.

15. Article selon la revendication 14, à savoir un fil ou un câble comprenant au moins une couche constituée de ladite composition polymère ignifuge selon l'une des revendications 1 à 13, de préférence un câble moyenne ou haute tension comprenant au moins une couche constituée de ladite composition polymère ignifuge selon l'une des revendications 1 à 13.
